# EUROPÄISCHE PATENTANMELDUNG

(11) **EP 1 582 431 A2**
(43) Veröffentlichungstag der Anmeldung: **05.10.2005**
(21) Anmeldenummer: 05006979.8
(22) Anmeldetag: 31.03.2005
(51) Int. Cl.: B62B 1/22, B62B 5/04

(54) **Schubkarre**

(30) Priorität: 03.04.2004 DE 202004005245 U; 15.04.2004 DE 202004005919 U
(71) Anmelder: Müller & Baum GmbH & Co. KG, D-59846 Sundern-Hachen (DE)
(72) Erfinder: Paquet, Paul, 67754 Essweiler (DE)
(74) Vertreter: Basfeld, Rainer

(57) **Zusammenfassung**

Schubkarre, bestehend aus einem Trog (1), einem Gestell (2) mit Griffen (3) und einer Gabel (4) für die Lagerung der Achse (5) des Rades (6), wobei die Achse (5) des Rades (6) ruht in einem Schlitz (7) eines Schlitzträgers (8) der mit der Gabel (4) verbunden ist, wobei der Schlitz (7) erstreckt sich schräg nach unten zum rückwärtigen Ende des Schubkarrens, wobei auf der Gabel (4) ist ein Bremsbacken (9) angeordnet, wobei der Abstand des Bremsbackens (9) zum oberen Ende (10) des Schlitzes (7) so bemessen ist, dass das Rad frei (6) im Schubbetrieb läuft und der Abstand zum hinteren unteren Ende des Schlitzes (7) so bemessen ist, dass das Rad (6) bei entsprechender Lage der Achse (5) am Bremsbacken (9) anliegt und wobei die Achse im Schlitz (7) gleitet, sodass beim Schwenken des Karrens aus der Waagerechten in die Senkrechte die Achse (5) zum unteren Ende bewegt wird und das Rad (6) an dem Bremsbacken (9) anschlägt.

## Beschreibung

Schubkarren dienen auf Baustellen oder im Gartenbetrieb dazu, schüttfähiges Material, wie Erde, Steine etc. von einem zum anderen Ort zu transportieren. Das Beladen geschieht meist von Hand und am Ort des Bedarfs wird die Schubkarre an den Griffen angehoben und senkrecht gestellt, um das Gut auszuschütten. Dabei tritt folgendes Problem auf. Da die Schubkarrenachse ungebremst ist, wird beim Senkrechtstellen ein sehr instabiler Zustand erzeugt, das Rad kann nach vorn oder nach hinten wegrollen, sodass ein verhältnismäßig hoher Kraftaufwand erforderlich ist, da nicht nur die Last angehoben, sondern mit hohen Bewegungsfreiheitsgraden ausbalanciert werden muss.

Die vorliegende Erfindung hat sich daher die Aufgabe gestellt, einen Schubkarren zu schaffen, dessen Handhabung beim Kippvorgang erheblich erleichtert ist. Ferner bestand die Aufgabe darin, diese Erleichterung mit sehr einfachen Mitteln und damit sehr kostengünstig und gleichzeitig sehr robust zu verwirklichen, sodass die Mechanik den hier üblichen groben Beanspruchungen standhält.

Die Lösung dieser Aufgabe gelingt mit einer Schubkarre bestehend aus einem Trog, einem Gestell mit Griffen und einer Lagerung der Achse des Rades, bei welcher erfindungsgemäß die Achse des Rades in einem Schlitz ruht der mit einer Gabel verbunden ist, wobei sich der Schlitz schräg nach unten zum rückwärtigen Ende des Schubkarrens erstreckt. Auf der Gabel ist ein Bremsbacken angeordnet, wobei der Abstand des Bremsbackens zum oberen Ende des Schlitzes so bemessen ist, dass das Rad im Schubbetrieb frei läuft und der Abstand zum hinteren unteren Ende des Schlitzes so bemessen ist, dass das Rad am Bremsbacken anliegt. Die Achse gleitet im Schlitz, sodass beim Schwenken des Karrens aus der Waagerechten die Achse zum unteren Ende bewegt wird und das Rad an dem Bremsbacken anschlägt.

Die Funktion der Vorrichtung ist die folgende. Bei normalem, d.h. Schubbetrieb, liegt die Achse infolge des Gewichts der Schubkarre am oberen Ende des Schlitzes an. Hebt man nun den Schubkarren an den Griffenden an und bringt diesen zum Ausschütten des in seiner Mulde befindlichen Guts in die Senkrechte so gleitet die Achse nach dem Überschreiten einer bestimmten Lage des Schlitzes nach hinten, wobei sich das Rad vor dem Anschlagen der Achse an das gegenüberliegende Schlitzende oder nahe diesem an den Bremsbacken anlegt und somit das Rad sperrt. Letzteres kann somit weder vor noch zurück bewegt werden, d.h. in der Position des Ausschüttens des in der Mulde befindlichen Schüttgutes befindet sich der Schubkarren in einer stabilen Lage und die Griffe können hin- und herbewegt werden, ohne dass das Rad wegrollt.

Der Winkel des Schlitzes zur waagerechten - bei waagerechter Stellung des Schubkarrens - ist spitz, vorteilhaft etwa 45°. Der Bremsbacken ist in besonders einfacher und wirksamer Weise ein an der das Rad tragenden Gabel befestigter Querholm, der darüber hinaus auch die Gabel selbst stabilisiert. Zusätzlich kann am Querholm ein Bremsblech angebracht sein, das dann beim Bremsvorgang flächig am Rad anliegt. Der Schlitz kann in ein an der Gabel angeordnetes separates Blech eingeschnitten sein, in besonders einfacher Weise ist der Endabschnitt der Gabel schräg nach oben weisend (insbesondere 45°) ausgerichtet und der Schlitz ist in diesem angeordnet, wozu die Endabschnitte der Gabel auch abgeplattet sein können.

Eine weitere Ausgestaltungsmöglichkeit der Erfindung besteht darin, die Radachse (beidseitig) mit einer Feder zu versehen, die das Rad in seine Ausgangsstellung zurückfedert.

Anhand der beiliegenden Figuren wird die vorliegende Erfindung näher erläutert.

Dabei zeigen
- **Figur 1**: die erfindungsgemäße Schubkarre in Seitenansicht in fahrbereiter waagerechter Stellung,
- **Figur 2**: die Lagerung der Achse,
- **Figur 3**: die Schubkarre in aufgestellter, d.h. senkrechter Stellung und
- **Figur 4**: die Schubkarre von unten in senkrechter Stellung.

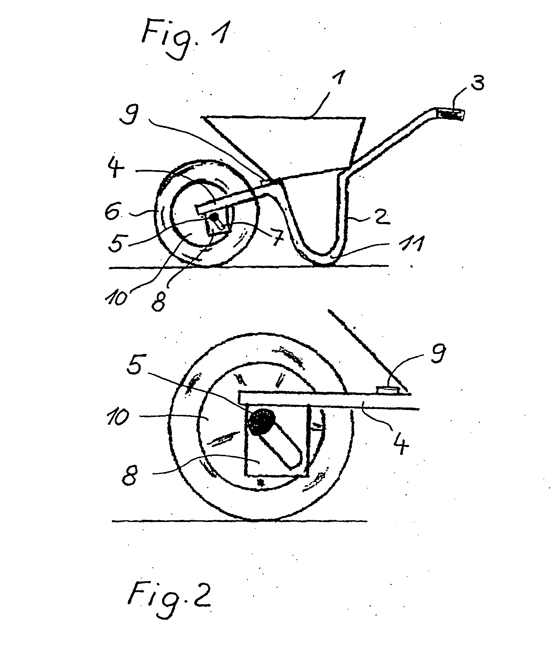

In **Figur 1** ist der Schubkarren in Seitenansicht gezeigt, er besitzt einen Trog 1, der auf einem Gestell 2 ruht. Dieses Gestell 2 weist nach rückwärts gerichtete Griffe 3 auf, nach vorne erstreckt sich eine Gabel 4 in welcher das Rad 6 mit der Felge 10 bzw. dessen Achse 5 gelagert ist. Die Karre steht auf drei Punkten, nämlich dem Rad 6 und den Fußteilen 11 des Gestells 2.

Die Achse 5 des Rades 6 ist in beidseitig an der Gabel 4 angeschweißten Blechen des Schlitzträgers 8 gehalten, die Achse 5 ruht in dem nach unten offenen Schlitz 7. In dieser Stellung befindet sich die Achse oben im Schlitz 7, das Gewicht des Karrens drückt die Gabel 4 nach unten.

Der Schlitz erstreckt sich spitzwinklig zur Waagerechten nach hinten unten, vorzugsweise um etwa 45°.

Auf die Gabel 4 ist als Querholm der Bremsbacken 9 aufgeschweißt, das Rad 6 läuft in dieser Stellung frei, d.h. berührt den Bremsbacken 9 nicht.

In **Figur 2** ist diese Anordnung in Vergrößerung dargestellt, man erkennt die Gabel 4 mit dem daran befestigten Bremsbacken 9 und dem Schlitzträger 8, in welchem die Achse 5 des Rades 6 ruht. Auch hier liegt die waagerechte Position des Schubkarrens vor.

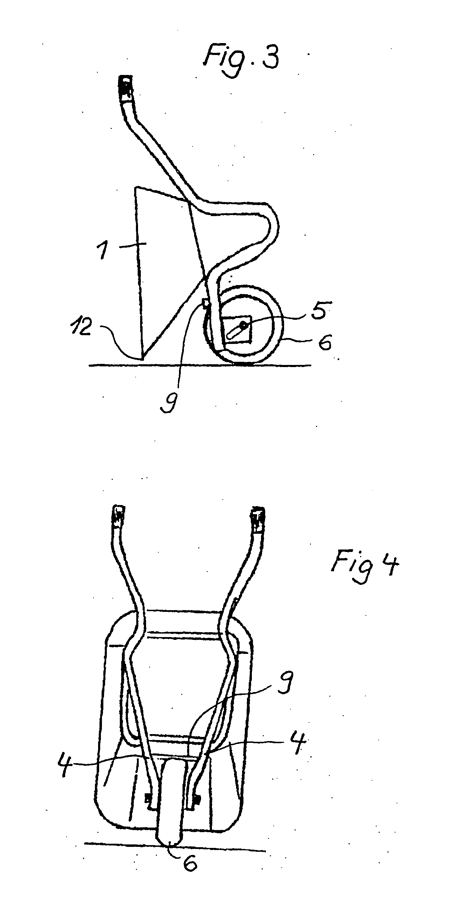

In **Figur 3** ist der Schubkarren aufgestellt. Die Achse 5 befindet sich jetzt am oder nahe dem gegenüberliegenden Ende des Schlitzes 7. Das Rad 6 ist dabei nach rückwärts zu den Griffen 3 verschoben und das Rad 6 liegt am Bremsbacken 9 an.

Bei entsprechender Gestaltung der Vorderkante 12 des Troges 1 steht der Schubkarren frei, er ist jedoch durch den Bremsbacken 9 gebremst. Beispielsweise kann er in dieser Stellung mit scharfem Strahl zur Reinigung ausgespritzt werden, ohne durch den Wasserdruck auszuweichen.

Erfasst man die Karre an den Griffen 3, so kann diese um die Achse 5 geschwenkt bzw. gerüttelt werden, ohne nach vorne oder hinten auszuweichen.

**Figur 4** zeigt den Karren in der durch den Bremsbacken 9 gesperrten Lage, wobei das Rad 6 an diesem anliegt. Der Bremsbacken 9 weist natürlich eine solche Distanz vom Rad 6 nach hinten auf, dass das Erreichen des Bremsbackens 9 mit dem rückwärtigen in dieser Stellung oberen Ende des Schlitzes zusammenfällt. Der Bremsbacken 9 ist z.B. zwischen die Gabel 4 geschweißt, er kann beliebige geeignete Formen aufweisen und mit einem flächig am Rad 6 anliegenden Blech versehen sein.

### Bezugszeichenliste

- 1: Trog
- 2: Gestell
- 3: Griffe
- 4: Gabel
- 5: Achse
- 6: Rad
- 7: Schlitz
- 8: Schlitzträger
- 9: Bremsbacken
- 10: Felge
- 11: Fußteil
- 12: Vorderkante

## Patentansprüche

1. Schubkarre, bestehend aus einem Trog (1), einem Gestell (2) mit Griffen (3) und einer Gabel (4) für die Lagerung der Achse (5) des Rades (6), **gekennzeichnet durch** die folgenden Merkmale
a) die Achse (5) des Rades (6) ruht in einem Schlitz (7) eines Schlitzträgers (8) der mit der Gabel (4) verbunden ist;
b) der Schlitz (7) erstreckt sich schräg nach unten zum rückwärtigen Ende des Schubkarrens;
c) auf der Gabel (4) ist ein Bremsbacken (9) angeordnet, wobei
d) der Abstand des Bremsbackens (9) zum oberen Ende (10) des Schlitzes (7) so bemessen ist, dass das Rad frei (6) im Schubbetrieb läuft und der Abstand zum hinteren unteren Ende des Schlitzes (7) so bemessen ist, dass das Rad (6) bei entsprechender Lage der Achse (5) am Bremsbacken (9) anliegt und
e) die Achse im Schlitz (7) gleitet, sodass beim Schwenken des Karrens aus der Waagerechten in die Senkrechte die Achse (5) zum unteren Ende bewegt wird und das Rad (6) an dem Bremsbacken (9) anschlägt.

2. Schubkarre nach Anspruch 1, **dadurch gekennzeichnet, dass** der Schlitz (7) zur Waagerechten einen Winkel von etwa 45° aufweist.

3. Schubkarre nach Anspruch 1 oder 2, **dadurch gekennzeichnet, dass** der Bremsbacken (9) ein an der Gabel (4) angebrachter Querholm ist.

4. Schubkarre nach einem oder mehreren der Ansprüche 1 bis 3, **dadurch gekennzeichnet, dass** die Radachse (5) gefedert ist.

5. Schubkarre nach einem oder mehreren der Ansprüche 1 bis 4, **dadurch gekennzeichnet, dass** an dem Bremsbacken (9) ein dem Rad (6) zugekehrtes Blech angeordnet ist.

6. Schubkarre nach einem oder mehreren der Ansprüche 1 bis 5, **dadurch gekennzeichnet, dass** der Schlitzträger (8) in einen aufwärts gerichteten Endabschnitt der Gabel (4) eingeformt ist.
